# EUROPEAN PATENT SPECIFICATION

(11) **EP 0 210 844 B1**
(45) Date of publication and mention of the grant of the patent: **04.05.1994**
(21) Application number: 86305711.3
(22) Date of filing: 24.07.1986
(51) Int. Cl.: G11B 23/113, G11B 23/26

(54) **Splicing and loading of tape into cassettes**
Spleissen und Laden von Band in Kassetten
Epissage et chargement de bande dans des cassettes

(30) Priority: 24.07.1985 GB 8518748
(43) Date of publication of application: 04.02.1987
(73) Proprietor: Sony Magnescale, Inc., Shinagawa-ku, Tokyo 141 (JP)
(72) Inventor: Gardner, John Phillip, London N9 (GB)
(74) Representative: Lawrence, Malcolm Graham

(56) References cited:
- FR-A- 2 343 309
- GB-A- 1 577 037
- US-A- 3 637 153
- US-A- 3 797 770
- US-A- 3 888 480
- PATENT ABSTRACTS OF JAPAN, vol. 8, no. 265 (P-318)[1702], 5th December 1984; & JP-A-59 132 468

## Description

The invention relates to an apparatus and method for splicing and loading of tape into cassettes according to US-A-3,888,480 which is reflected in the preamble of claims 1 and 11.

Magnetic tape cassettes (eg audio and video tape cassettes) are supplied commercially either as blank tape or as pre-recorded tape. In both cases, the cassette comprises two rotatable hubs, two lengths of leader tape one secured to each hub and a predetermined length of magnetic use tape having its ends spliced to the two leaders.

In manufacture of a cassette tape, magnetic tape is loaded to a leadered cassette, ie a cassette containing a relatively short length of leader secured by one end to one hub and by the other end to the other hub. Such a leadered cassette for audio use is known as a "C-zero cassette" whilst such a cassette constructed for video use is known as a "V-zero cassette". The first step in loading is to cut the leader into two separate leader lengths. The magnetic tape to be loaded is then spliced to one length of leader and the hub to which that leader length is connected is rotated to wind a predetermined length of magnetic tape onto the same hub. The magnetic tape is then cut and its trailing end spliced to the leading end of the remaining leader length so that the two hubs are connected by a leader-magnetic-leader continuous tape sequence.

The above sequence of operations can be carried out as hand work, but in modern practice the operation is mechanised to provide manufacturing speed and uniform product quality. A typical apparatus for performing these operations is disclosed in US Patent 3637153. This apparatus comprises means for holding a supply reel of magnetic tape, means for supporting a tape cassette (eg by its hubs), a splicing assembly comprising a stationary splicing head and first and second movable splicing heads which are alternately movable into contiguous relation with the stationary splicing head, means for releasably holding tape ends on the stationary and movable splicing heads, means for slitting tape supported by the splicing assembly, means for rotating the supply reel and one of the cassette hubs to cause magnetic tape spliced to a leader on the hub to be unwound from the supply reel and wound on the hub in question, and means for applying splicing tape to the abutting ends of leader and magnetic tapes supported by the splicing assembly. In operation, cassette loading commences with the leader ends (ie a cut hub-hub leader length) held on the contiguously disposed stationary head and first splicing head, respectively, and the end of the magnetic tape held on the second splicing head. The first movable splicing head is then moved away from the stationary splicing head and the second movable head with it held end of the magnetic tape is moved into contiguous relation with the stationary head. This brings the leader held on the stationary head into end-end abutment with the magnetic tape and the two are then spliced together. The spliced leader-magnetic tape is then wound onto the cassette hub to which the leader is secured and winding continued until a predetermined length of magnetic tape has been loaded onto the hub. The magnetic tape is then slit. The second moveable splicing head, which continues to hold the leading edge of the magnetic tape supply, is then removed away from the stationary head leaving a trailing end of magnetic tape from the newly loaded cassette held by the stationary head. Moving the first moveable splicing head back into continuous relation with respect to the stationary head juxtapose the leading end of the remaining cut leader length in abutment to the trailing end of magnetic tape held on the stationary head. These two ends are then spliced to complete the production of a loaded cassette. The apparatus described in US Patent 3 637 153 includes control means for selectively operating the components of the apparatus to perform the above-described operations in the sequence given.

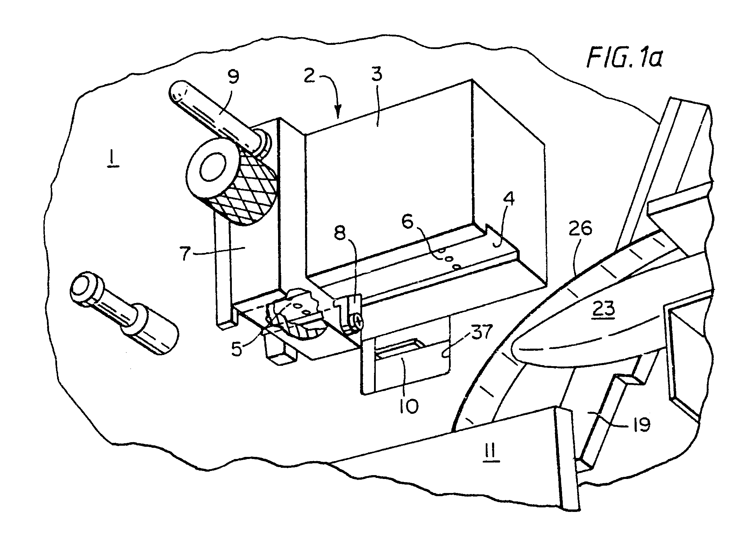

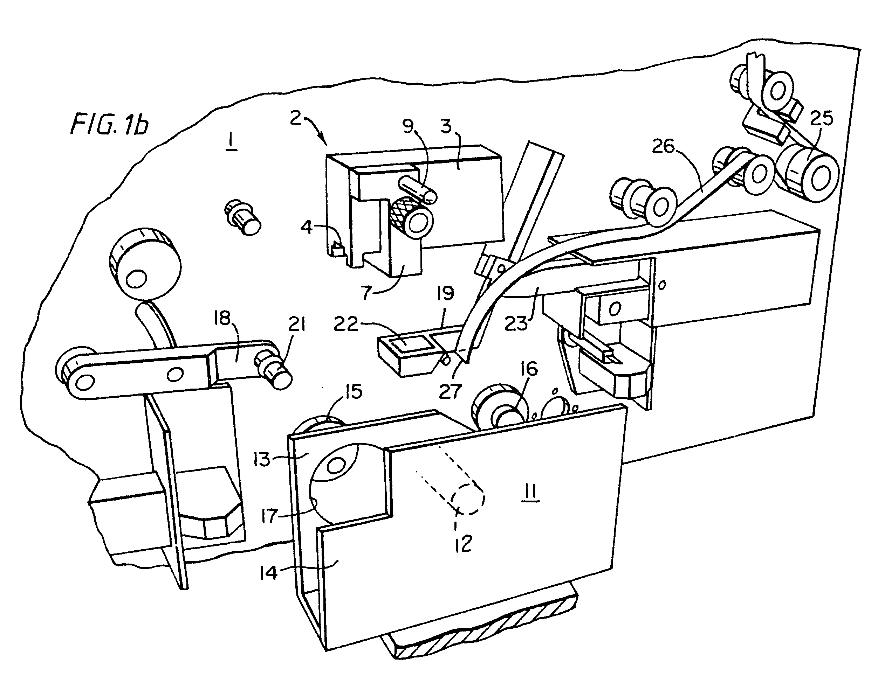

Specification GB-A-1 577 037 ("AEG") discloses a very complicated device intended to operate upon two cassettes simultaneously and the specification is obscure as to precisely how the device operates. The following makes certain assumptions as to such operation. As in the case of much of the other art known, AEG extracts leader tape 7 and disposes it upon a plate 22 where the tape is received in a groove 23 (Figure 14) in superimposition with respect to tape 15. Tape 15 overlaps into what appears to be recessed area shown in Figure 14 of AEG crossing the line of groove 23. A cutter 24 appears to move transversely of the tape along such recessed area (Figures 4 and 17). Such cutter displacement cuts the two tapes laterally. Presser plate 21 is then raised. Suction at the surface of plate 21 retains one cut portion of tape 7 so that the raising of the plate 21 removes the cut portion from the cutting and splicing area designated by reference numeral 17 in Figure 1 of the AEG drawings. The remaining leader tape and the use tape 15 are then left in abutting relationship as described at lines 91 to 96 on page 5 of AEG. A member in the recessed area previously referred to above presumably elevates to support the two tapes in abutment. The jointing device 25 then descends to perform a joining, or splicing, of the use tape 15 and leader tape 7 together. The cutter 24 operates by lateral movement along the recessed area adjacent an edge defined as part of plate 22 so that the cut is located at that position. Splicing therefore takes place across a join between a fixed surface and a (movable) surface which raises and lowers in the recessed area in which cutter 24 operates.

According to the invention, there is provided a method of loading a leadered cassette with use tape using a tape loading machine which method comprises disposing a leading end of a terminal portion of a use tape upon a splicing surface defined by a splicing member of said tape loading machine; releasably retaining said end in such disposition; extracting a loop of leader tape from a leadered cassette, the cassette being supported so that its hubs may be rotated by drive means of said tape loading machine; disposing the extracted leader tape loop so that said leader tape is in alignment with said use tape terminal portion and is juxtaposed with respect to the use tape end, a first integral portion of the length of said extracted leader tape being releasably retained upon said splicing surface and secured to a first hub of said hubs of the cassette by its end and a second integral portion of the length of said extracted leader tape being secured to a second hub of said hubs of the cassette by its end; slitting the leader tape across its lateral dimension so that said leader tape loop is divided into said first and second portions at the location of said use tape leading end, the resulting trailing end of said first leader tape portion occupying a position in which it is essentially in abutment with the use tape end upon said splicing surface; retaining said second leader tape portion by means of tape retaining means at a location spaced from the essentially abutting ends of said use tape and said first leader tape portion; forming a first splice by applying splicing tape to the essentially abutting ends of said use tape and said first leader tape portion, the splicing tape application of said first splice taking place against the splicing surface and with said essentially abutting ends both supported upon said splicing surface to splice the first leader tape portion to the use tape rotating the first hub of the cassette to effect winding to draw said first leader tape portion and said use tape across the splicing surface and into the cassette; terminating rotation of said first hub when a predetermined length of said use tape has been drawn into the cassette; slitting the use tape across its lateral dimension whilst releasably retaining said use tape upon said splicing surface; whilst releasably retaining the trailing end of said use tape upon said splicing surface and whilst the leading end of said second leader tape portion is held by said tape retaining means essentially abutted with respect to the so-retained trailing end of said use tape, forming a second splice by applying splicing tape to the essentially abutting ends of said use tape and said second leader tape portion to splice the second leader tape portion to the use tape, the splicing tape application of said second splice taking place against the splicing surface and with said essentially abutting ends of said use tape and said second leader tape portion both supported upon said splicing surface; taking slack tape into the cassette; and removing the loaded cassette from its support; the first and second splices on formation being disposed as a link between portions of spliced use tape and leader tape both of which portions are received on the splicing surface so that the splicing surface underlies said splices during their formation, characterized in that extraction of said leader tape loop and its disposition in alignment with said use tape terminal portion and juxtaposition with respect to the use tape end is accomplished (i) by a leader extraction member acting on said first integral portion of the length of said leader tape and (ii) by said tape retaining means acting on said second integral portion of the length of said extracted tape.

In an embodiment of the invention, leader extraction is effected by operation of leader extraction means comprising a first member for engaging the first leader tape portion and bringing said first portion into contact with said splicing surface and a second member for engaging the second leader tape portion and defining retaining means by which said leader tape is releasably retained. Preferably, the second leader tape portion is releasably retained by applying a vacuum through perforations in a surface of said retaining means.

Advantageously, the leading end of said use tape, after slitting thereof, is releasably retained on said splicing surface so that a further cycle of operations can be commenced after removal of the loaded cassette from its support.

It will be appreciated from the above that the two splicing operations are effected without the use of moveable splicing surfaces in addition to the stationary splicing surface in US Patent 3637153. The splicing of the first leader tape portion to the user tape is accomplished according to the invention by bringing the leader tape into close proximity or near contact with the use tape end, slitting the leader tape at the locality of the use tape end and then splicing the resulting two ends together whilst both are releasably retained on the stationary splicing surface. The two ends essentially abut one another (ie they confront one another in close proximity) so that accurate splice gapping within the specification applicable to recording/playback hardware can consistently be accomplished. In previous techniques, butting of the leader and user tape ends depended on accurate alignment of the fixed stationary splicing surface with respect to the moveable splicing surfaces and this lead to inaccuracy in splicing. Splicing pressure on a moveable splicing surface also led to yield and consequent uneven adhesion of splicing tape as between the butted end held on the stationary splicing surface and that held on a moveable surface.

In a second aspect of the invention there is provided an apparatus for loading a cassette with use tape which apparatus comprises a splicing station comprising a splicing surface defined by a splicing member, tape passing across said splicing surface in operation of the apparatus, tape slitting means for traversing said surface between its upstream and downstream extremities to slit tape across its lateral dimension, vacuum means of the splicing surface to retain each so slit tape length releasably on said splicing surface, cassette support means for supporting a leadered cassette, means for rotating one of first and second hubs of the cassette to draw tape onto said hub, leader extraction means for extracting a loop of leader tape from said cassette, an extracted first integral portion of the length of said leader tape being releasably retained upon said splicing surface and secured to a first hub of said hubs of the cassette by its end and an extracted second integral portion of the length of said leader tape being secured to a second hub of said hubs of the cassette by its end, said leader extraction means being operable to bring the first integral portion of the length of said leader tape secured to said hub into contact with said splicing surface, tape retaining means having a first position in which a second portion of the length of said leader tape is retained by said retaining member in close proximity to said splicing surface and a second position in which said second portion is remote from said splicing surface, means operable against the splicing surface to apply splicing tape to essentially abutted tape ends retained at the splicing station, the splices on formation being disposed as a link between portions of spliced use tape and leader tape both of which portions are received on the splicing surface so that the splicing surface underlies said splices during their formation; and control means acting to conform operation of the appratus to the method regime defined in Claim 1; means for supplying tape to said splicing station; characterized in that the leader extraction means comprises (i) a leader extraction member for acting on said first integral portion of the length of said leader tape and (ii) said tape retaining means for acting on said second integral portion of the length of said leader tape.

One particular embodiment of the invention will now be described by way of example only, reference being made to the accompanying drawings in which:-
Figures 1a and 1b show the apparatus according to the present invention from two different positions, in both cases in part only; and
Figures 2a to 2i show the splicing station of the apparatus at various stages of the operating sequence involved in a loading V-zero cassette.

The apparatus shown in Figures 1a and 1b comprises a front plate 1 mounted to a chassis (now shown), the front plate 1 assisting to define a housing (not shown) in which control means, electrical motive power means, motive power transmission, a vacuum source and a pneumatic power source (all not shown) are housed.

Securely mounted to front plate 1 is a splicing head 2 comprising a solid metallic block 3 grooved on its undersurface with a longitudinal tape-receiving inverted groove 4. Two sets of three perforations open at the groove surface to provide vacuum shoes 5 and 6 and are connected to the vacuum source within the housing. A tape slitting head 7 mounting a blade 8 cooperates with the grooved undersurface of block 3 and is mounted for reciprocatory movement across the groove 4 perpendicular to the plane of front plate 1 by means of fixed shaft 9 upon which slitting head 7 slides. Movement of slitting head 7 is accomplished by displacement of an attached piston (not shown) operated from the pneumatic power source. A cross-groove (not shown) in the block 3 intersects groove 4 perpendicular thereto and provides a path for blade 8 to pass across groove 4 in slitting, without contacting the material of the block 3, between vacuum shoes 5 and 6.

A splicing arm 10 operates beneath the groove 4. Arm 10 has a retracted position in which it is withdrawn into the housing through the splicing arm orifice 31 in the front plate 1, and an operating position in which the arm is displaced from the housing to apply a short length of splicing tape cut from a supply within the housing to abutting tape ends disposed in groove 4. Splicing arm 10 is powered from the vacuum source referred to earlier and operates in conventional manner known in the art.

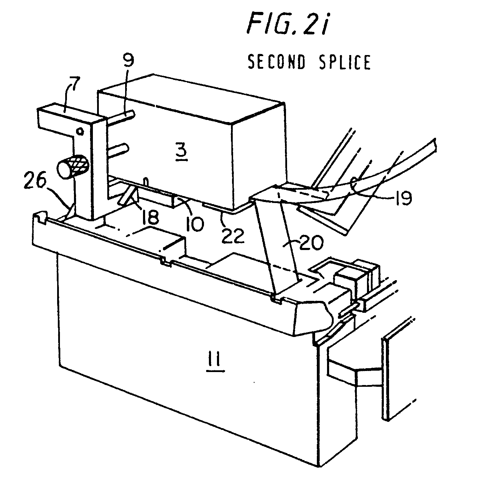

Adjacent the base of front plate 1, a cassette holder 11 is mounted to a piston 12 for displacement under power from the pnuematic power source between a cassette-receiving position (Figures 1a and 1b) in which the holder is relatively forward of plate 1 to facilitate charging of a V-zero cassette thereto, and a cassette-holding position (Figures 2a to 2i) in which the cassette body is proximate the front plate 1 between inner and outer plates 13 and 14 and ready for a tape loading sequence to begin.

Two driven hubs 15 and 16 engage the spool sockets (not shown) when the cassette holder is in the cassette-holding position just referred to, hub 15 penetrating opening 17 provided for the purpose in the inner plate 13 of the cassette holder 11. The two hubs 15 and 16 terminate driven shafts (not shown) disposed within the housing and powered from the electrical motive power means (ie a wind motor) in conventional manner.

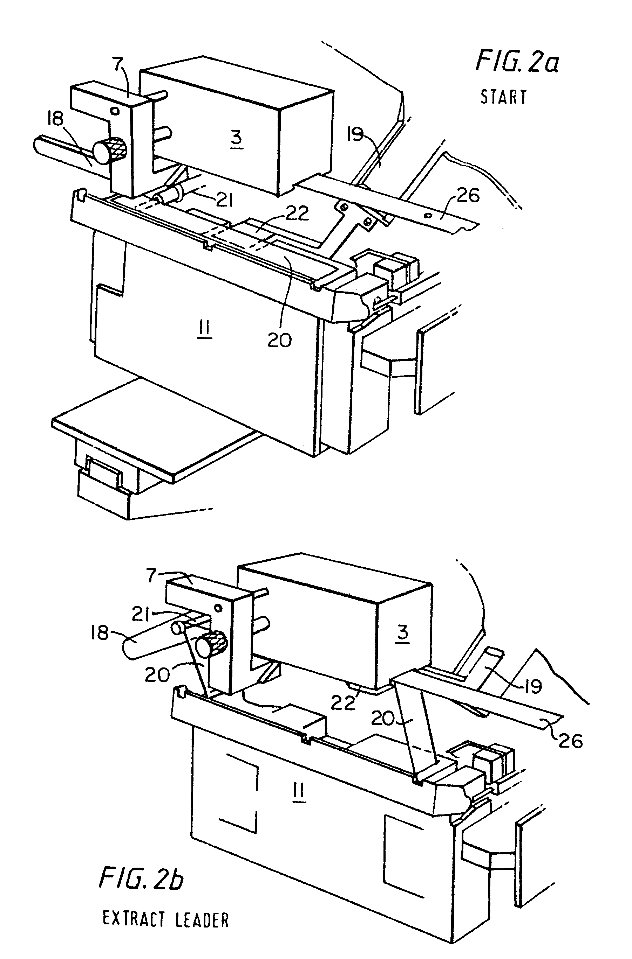

In the cassette holding position, leader extraction arm 18 and lift arm 19 are received adjacent the underside of cassette leader tape 20, as shown most clearly in Figure 2a. Both leader extraction arm 18 and lift arm 19 are displaceable, from the positions just referred to, to withdraw leader tape 20 from the V-zero cassette and dispose it within groove 4 of the splicing head 2 (Figure 2b), both arms being powered for two-direction movement from the pneumatic power source referred to earlier in conventional manner, for example by using a pneumatic piston-and-cylinder assembly and a ball slide. Leader extraction arm 18 is equipped with a cylindrical tape-contacting guide 21 whilst lift arm 19 terminates in a vacuum shoe 22 by which tape is retained on its surface by suction. A slack arm 23 (not shown in Figures 2a to 2i in the interests of simplicity and clarity of depiction for the other parts) is mounted for reciprocatory movement parallel to the plane of front plate 1, slack arm 23 again being powered from the pneumatic power source.

The slack arm 23 serves to engage extracted leader tape 20, drawing an excess thereof from the V-zero cassette and then slackening slightly so that it can be ensured that leader tape in groove 4 is not under tension during slitting and splicing. The slack arm 23 also controls the position of cut.

Magnetic tape 26 for supply to the V-zero cassette is supplied from a supply reel and is transported to the splicing head 2 via a system of capstans and guides, as will be seen from Figure 1b of the drawings, including a rubber capstan 25. A terminal or leading end 27 of magnetic tape 26 is disposed in the groove 4 of block 3 of the splicing head 2.

In operation of the apparatus shown in the drawings, leading end 27 of magnetic tape 26 is first guided around the capstan and guide system to the splicing head 2 where it is held in position by means of vacuum supplied to each of vacuum shoes 5 and 6. Slitting head 7 then operates and the cut-off tape end is removed and discarded.

A V-zero cassette is then loaded to cassette holder 11 and the holder 11 then displayed inwardly on piston 12.

Leader extraction arm 18 and lift arm 19 are then energized and move to the top of their strokes. The effect of this is to extract leader tape 20 and dispose it in groove 4 so that the leading end 27 of magnetic tape 26 is spaced about 0.25mm from the surface of the leader tape (Figure 2b), the vacuum shoe 22 of lift arm 19 at the top of its stroke falling similarly short of the downwardly facing surface or ceiling of groove 4.

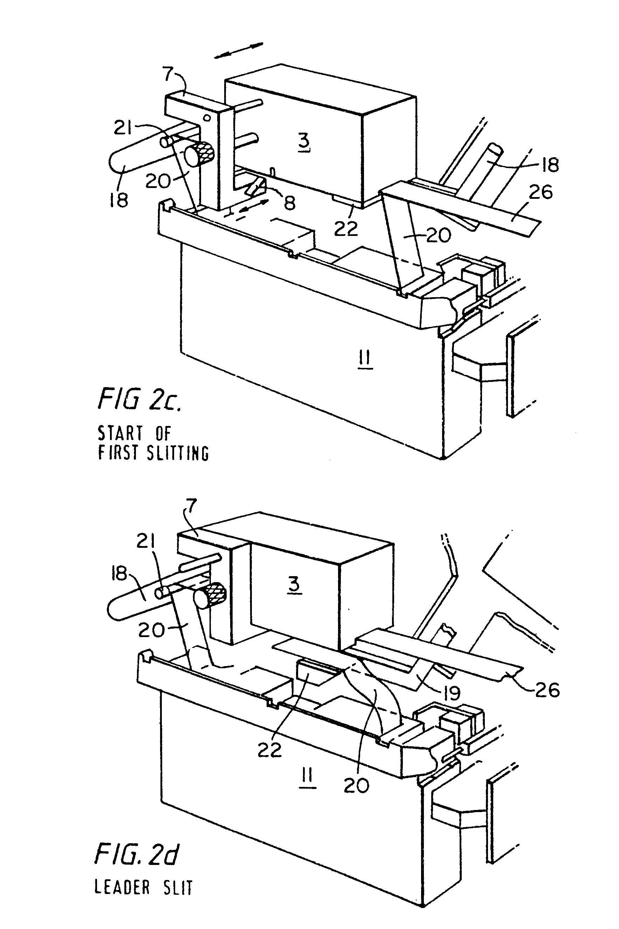

Lift arm 19 activates a microswitch (not shown) at the top of its stroke, thus activating an air-controlled stop on the slide of the lift arm. The stop defines a position intermediate the lowest position of the stroke of arm 19 and the top of its stroke (as represented in Figures 2d to 2g).

With leader tape 20 disposed in the groove 4 of splicing head 2, the slack arm 23 conditions the cassette (ie the arm 23 is operated to take up leader tape 20 on one of the cassette spools).

When the lift arm 19 has been energized and reaches the top of its stroke, a delay is started after which vacuum is applied to vacuum shoes 5 and 6 in the groove 4 of block 3 and vacuum shoe 22 of lift arm 19 is switched on. This stage in the operating sequence is, of course, also represented by Figure 2b.

After an additional delay, slitting head 7 is activated causing it to move from its rest position, in which it is clear of block 3, towards front plate 1 and then to reciprocate to its rest position (Figure 2c).
This slits leader tape 10 at the location of magnetic tape leading end 27 into a first or forward length which can be wound by hub 15 and a second length secured to the other spool of the V-zero cassette.

The lift arm 19 and leader extraction arm 18 are then deenergized causing them to drop under pneumatic force to their stops previously referred to. Vacuum shoe 22 is left switched on (Figure 2d) to retain the second length of leader tape 20, the first length of leader tape 20 being retained on the groove surface by vacuum shoe 6 and the use tape 26 being retained, with its leading end 27 butted to the trailing end of the first length of leader tape 20, in groove 4 by vacuum shoe 5.

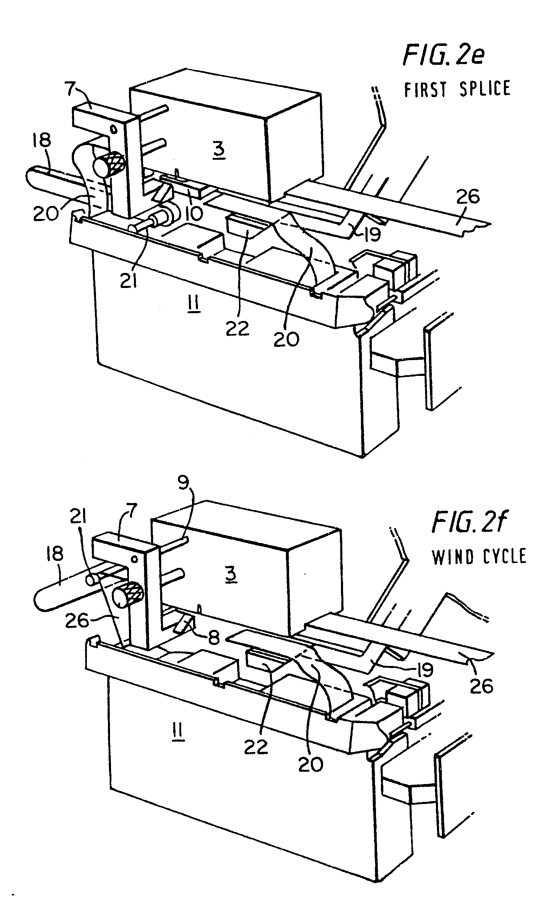

With the butting ends of the magnetic tape 26 and first or forward length of leader tape 20 retained in the above manner in groove 4, the splicing arm 10 is activated to adhere a short length of splicing tape over the butting ends and thereby splice the two lengths together (Figure 2e).

Leader extraction arm 18 is then again raised into leader tape contact and, with splicing arm 10 retracted, a wind cycle is commenced, vacuum continuing to be applied to vacuum shoe 22 but vacuum shoes 5 and 6 being deprived of vacuum so as to release the now spliced tape, by activating the wind motors driving hub 15 (Figure 2f). When a predetermined length of magnetic tape has been spooled into the cassette, the wind cycle stops and vacuum shoes 5 and 6 are re-activated (Figure 2f).

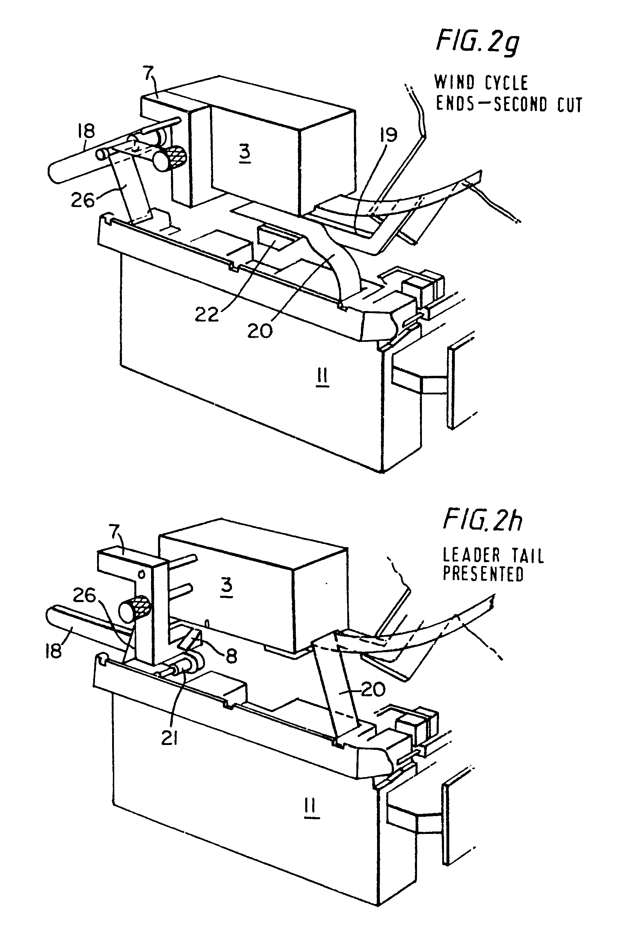

With a continuous length of magnetic tape 26 now retained in groove 4 by the vacuum shoes 5 and 6, a second slitting sequence is commenced to slit the use tape into two lengths (Figure 2g). Lift arm 19 is then activated to raise the leading end of the leader tape 20 (ie the second leader tape length referred to earlier) into close proximity (ie about 0.25mm away from the ceiling of groove 4) to the length of cut magnetic tape terminating in the leading end from the supply reel; leader extraction arm 18 is also de-energized (Figure 2h). In this condition, the leader tape positioned as described has its end essentially butted to the end of the magnetic tape 26 trailing from the hub 15 of the cassette.

A second splicing operation is then effected by activating splicing arm 10 a second time to splice together the trailing end of magnetic tape 26 and the leading end of the leader tape 20 from the other spool of the cassette (Figure 2i). Further winding at hub 15 after retraction of splicing arm 10, de-activation of vacuum shoe 5 and de-activation of lift arm 19 to the lowest position of its stroke draws the slack loop of tape into the cassette leaving only leader tape exposed at the mouth of the cassette. Continued activation of vacuum shoe 6 retains the leading end of magnetic tape 26 from the supply reel within groove 4 in readiness for a further cycle of operations to be conducted with a fresh V-zero cassette.

In past practice, butting of the leader tape to the magnetic tape depended on the accurate alignment of a fixed block to each of two moveable blocks (known as "shift blocks") both in terms of straightness and height from front plate 1. The apparatus of the invention described above with reference to the drawings relies only on the accurate alignment of the height of the lift arm 19 from the front plate 1. In addition, the right hand leader extract arm of previous equipment was by necessity thin in order for it to move up and down behind the cassette being wound. This led to problems of distortion making accurate alignment of the guide on the arm difficult to maintain. The lift arm 19 is rigidly attached to the slide, thus avoiding this problem. Splicing takes place in the apparatus of the invention on a solid fixed block (ie block 3); before the apparatus of the invention, splicing always took place partly on a fixed block and partly on a shift block which yielded under impact from the splicing arm so as to lead to differential adhesion of the splicing tape.

Whilst in foregoing, a preferred embodiment of the invention has been described, it will be appreciated various modifications thereto may be made without departing from the spirit of the invention. Thus, for example, whilst leader extraction has been referred to as resulting in near contact of the extracted leader with the use tape end retained upon the splicing surface, it is envisaged that actual contact may occur.

## Claims

1. A method of loading a leadered cassette with use tape (26) using a tape loading machine which method comprises disposing a leading end (27) of a terminal portion (26) of a use tape upon a splicing surface (4) defined by a splicing member (3) of said tape loading machine; releasably retaining said end (27) in such disposition; extracting a loop of leader tape (20) from a leadered cassette, the cassette being supported so that its hubs may be rotated by drive means (15, 16) of said tape loading machine; disposing the extracted leader tape loop (20) so that said leader tape (20) is in alignment with said use tape terminal portion (26) and is juxtaposed with respect to the use tape end (27), a first integral portion of the length of said extracted leader tape (20) being releasably retained upon said splicing surface (4) and secured to a first hub of said hubs of the cassette by its end and a second integral portion of the length of said extracted leader tape (20) being secured to a second hub of said hubs of the cassette by its end; slitting the leader tape (20) across its lateral dimension so that said leader tape loop (20) is divided into said first and second portions at the location of said use tape leading end (27), the resulting trailing end of said first leader tape portion occupying a position in which it is essentially in abutment with the use tape end (27) upon said splicing surface; retaining said second leader tape portion by means of tape retaining means (22) at a location spaced from the essentially abutting ends of said use tape (26) and said first leader tape portion (20); forming a first splice by applying splicing tape to the essentially abutting ends of said use tape (26) and said first leader tape portion (20), the splicing tape application of said first splice taking place against the splicing surface (4) and with said essentially abutting ends both supported upon said splicing surface (4) to splice the first leader tape portion (20) to the use tape (26); rotating the first hub of the cassette to effect winding to draw said first leader tape portion (20) and said use tape (26) across the splicing surface (4) and into the cassette; terminating rotation of said first hub when a predetermined length of said use tape (26) has been drawn into the cassette; slitting the use tape (26) across its lateral dimension whilst releasably retaining said use tape (26) upon said splicing surface (4); whilst releasably retaining the trailing end of said use tape (26) upon said splicing surface (4) and whilst the leading end of said second leader tape portion (20) is held by said tape retaining means (22) essentially abutted with respect to the so-retained trailing end of said use tape (26), forming a second splice by applying splicing tape to the essentially abutting ends of said use tape (26) and said second leader tape portion (20) to splice the second leader tape portion (20) to the use tape (26), the splicing tape application of said second splice taking place against the splicing surface (4) and with said essentially abutting ends of said use tape (26) and said second leader tape portion (20) both supported upon said splicing surface (4); taking slack tape (26) into the cassette; and removing the loaded cassette from its support (11); the first and second splices on formation being disposed as a link between portions of spliced use tape and leader tape both of which portions are received on the splicing surface (4) so that the splicing surface (4) underlies said splices during their formation, characterized in that extraction of said leader tape loop (20) and its disposition in alignment with said use tape terminal portion (26) and juxtaposition with respect to the use tape end (27) is accomplished (i) by a leader extraction member (21) acting on said first integral portion of the length of said leader tape (20) and (ii) by said tape retaining means (22) acting on said second integral portion of the length of said extracted tape (20).

2. A method as claimed in Claim 1 wherein the end of the terminal portion of the use tape (26) is releasably retained on the splicing surface (4) by applying a vacuum through perforations (6) in said surface.

3. A method as claimed in Claim 1 or Claim 2 wherein the use tape terminal portion leading end (27) is disposed manually upon the splicing surface (4) in a first phase of a continuous operation by disposing the terminal portion on the splicing surface (4) with its end downstream of the position on the splicing surface (4) at which the leader tape is subsequently slit and then slitting the use tape terminal portion at such position and discarding the downstream tape remnant.

4. A method as claimed in any of Claims 1 to 3 wherein the terminal portion leading end (27) is disposed on the splicing surface (4) by conducting a previous complete tape operation as defined in Claim 1 in such manner that the leading end of said use tape (26) produced by laterally slitting said use tape (26) following winding of the predetermined length thereof into said cassette is retained by an upstream portion of the splicing surface (4) having its downstream extremity at the line of the lateral slit.

5. A method as claimed in any preceding claim which method comprises disposing a leading end (27) of a terminal portion (26) of a use tape upon a splicing surface (4) defined by a splicing member (3) of said tape loading machine; releasably retaining said end (27) in such disposition; extracting a loop of leader tape (2) from a leadered cassette by means of leader extraction means (19) of the machine, the cassette being supported with its mouth adjacent to said splicing surface (4) and opening in face-to-face relationship therewith to define a narrow space between the cassette mouth and the splicing surface (4) and so that its hubs may be rotated by drive means (15, 16) of said tape loading machine, said leader extraction means (19) being operable by displacement in the aforesaid space between the cassette mouth and the splicing surface (4); disposing the extracted leader tape loop (20) by means of said leader extraction means (19) so that said leader tape (20) is in alignment with said use tape terminal portion (26) and is juxtaposed with respect to the use tape end (27), an extracted first integral portion of the length of said leader tape (20) being releasably retained upon said splicing surface (4) and secured to a first hub of the hubs of the cassette by its end and an extracted second integral portion of the length of said extracted leader tape (20) being releasably retained by tape retaining means (22) of said leader extraction means (19) and secured to a second hub of the hubs of the cassette by its end; slitting the leader tape (20) across its lateral dimension to that said leader tape loop (20) is divided into said first and second portions at the location of said use tape leading end (27), the resulting trailing end of said first leader tape portion occupying a position in which it is essentially in abutment with the use tape end (26); and said second leader tape portion being retained by said tape retaining means (22) of said leader extraction means (19) at a location spaced from the essentially abutting end of said use tape (26) and said first leader tape portion (20); applying splicing tape to the essentially abutting ends of said use tape (26) and said first leader tape portion (20), the splicing tape application taking place against the splicing surface (4) and with said essentially abutting ends both supported upon said splicing surface (4) to splice the first leader tape portion (20) to the use tape (26) and being effected by splicing means (10) acting in the space between the cassette mouth and the splicing surface; rotating the first hub (15) of the cassette to draw said first leader tape portion (20) and said use tape (26) across the splicing surface (4) and into the cassette; terminating rotation of said first hub when a predetermined length of said use tape (26) has been drawn into the cassette; slitting the use tape (26) across its lateral dimension whilst releasably retaining said use tape (26) upon said splicing surface (4); whilst releasably retaining the trailing end of said use tape (26) upon said splicing surface (4) and whilst the leading end of said second leader tape portion (20) is held essentially abutted with respect to the so-retained trailing ends of said use tape (26) by said tape retaining means (22) of said leader extraction means (19), applying splicing tape to the essentially abutting ends of said use tape (26) and said second leader tape portion (20) to splice the second leader tape portion (20) to the use tape (26), the splicing tape application taking place against the fixed splicing surface (4) and with said essentially abutting ends of said use tape (26) and said second leader tape portion (20) both supported upon said fixed splicing surface (4); taking slack tape (26) into the cassette; and removing the loaded cassette from its support (11).

6. A method as claimed in any preceding claim wherein leader extraction is effected by operation of leader extraction means (19) comprising a first member (18) for engaging the first leader tape portion (20) and bringing said first portion into contact with said splicing surface (4) and a second member (19) for engaging the second leader tape portion (20) and defining retaining means (22) by which said second leader tape portion (20) is releasably retained.

7. A method as claimed in Claim 6 wherein the second leader tape portion (20) is releasably retained by applying a vacuum through perforations in a surface of said retaining means (22).

8. A method as claimed in any preceding claim wherein the leading end of said use tape (26), after slitting thereof, is releasably retained on said splicing surface (4) so that a further cycle of operations can be commenced after removal of the loaded cassette from its support (11).

9. A method as claimed in any preceding claim wherein said use tape terminal portion (26) is retained on a first portion of said splicing surface (4) and its end (27) is adjacent the junction of said first splicing surface (4) portion with a second splicing surface (4) portion and wherein said first portion of said extracted leader tape (20) is retained on said second splicing surface (4) portion and said leader tape (20) is slit at the said junction of the two surfaces.

10. A method as claimed in any preceding claim wherein the splicing surface of said tape loading machine is fixed so as to be immobile under splicing forces without suffering de minimis displacement.

11. An apparatus for loading a cassette with use tape (26) which apparatus comprises a splicing station (2) comprising a splicing surface (4) defined by a splicing member (3), tape passing across said splicing surface (4) in operation of the apparatus, tape slitting means (7) for traversing said surface between its upstream and downstream extremities to slit tape across its lateral dimension, vacuum means (5, 6) of the splicing surface (4) to retain each so slit tape length releasably on said splicing surface (4), cassette support means (11) for supporting a leadered cassette, means for rotating one of first and second hubs of the cassette to draw tape onto said hub, leader extraction means (19) for extracting a loop of leader tape (20) from said cassette, an extracted first integral portion of the length of said leader tape (20) being releasably retained upon said splicing surface (4) and secured to a first hub of said hubs of the cassette by its end and an extracted second integral portion of the length of said leader tape (20) being secured to a second hub of said hubs of the cassette by its end, said leader extraction means being operable to bring the first integral portion of the length of said leader tape secured to said hub (15) into contact with said splicing surface (4), tape retaining means (22) having a first position in which a second portion of the length of said leader tape (20) is retained by said retaining member in close proximity to said splicing surface (4) and a second position in which said second portion is remote from said splicing surface (4), means (10) operable against the splicing surface (4) to apply splicing tape to essentially abutted tape ends retained at the splicing station (2), the splices on formation being disposed as a link between portions of spliced use tape and leader tape both of which portions are received on the splicing surface (4) so that the splicing surface (4) underlies said splices during their formation; and control means acting to conform operation of the appratus to the method regime defined in Claim 1; means for supplying tape to said splicing station; characterized in that the leader extraction means comprises (i) a leader extraction member (21) for acting on said first integral portion of the length of said leader tape (20) and (ii) said tape retaining means (22) for acting on said second integral portion of the length of said leader tape (20).

12. An apparatus as claimed in Claim 11 and including cassette support means (11) for supporting a leadered cassette and orienting said cassette with its mouth adjacent to said splicing surface (4) and opening in face-to-face relationship therewith to define a narrow space between the cassette mouth and the splicing surface (4), leader extraction means operable in the aforesaid space between the cassette mouth and the splicing surface to bring a first integral portion of the length of said leader tape secured to said hub into contact with said splicing surface (4) and tape splicing means (10) acting in the space between the cassette mouth and the splicing surface (4) to apply splicing tape to essentially abutted tape ends retained adjacent said splicing surface (4).

13. An apparatus as claimed in Claim 11 or Claim 12 wherein said means to retain said tape releasably on said splicing surface (4) comprises a vacuum source opening through perforations (6) in the splicing surface (4).

14. An apparatus as claimed in Claim 11 or Claim 12 wherein reciprocatory means (23) is provided to condition said leadered cassette, said means including a member (23) having a retracted position in which it has no influence on tape secured to hubs of the cassette and an advanced position in which it has been brought into contact with a leader tape loop (20) extracted from said cassette and retained on said splicing surface (4) so as to define a longer path of circuit for said leader tape.

15. An apparatus as claimed in any of Claims 11 to 14 and comprising a splicing station (2) comprising a stationary splicing block (3) having a splicing surface (4), a blade (7) for traversing said surface to slit tape across its lateral dimension, vacuum openings (5, 6) to retain tape releasably on said splicing surface (4), means for supporting a leadered cassette and orienting said cassette with its mouth adjacent to said splicing surface (4) and opening in juxtaposed face-to-face relationship with the splicing surface (4), means for rotating a hub of the cassette to draw tape onto said hub, an extraction arm (19) for extracting leader tape (20) from said cassette, said arm being operable to bring a first integral portion of the length of said leader tape (20) secured to said hub into contact with said splicing surface (4), a lift arm (22) having a first position in which a second integral portion of the length of said leader tape (20) is disposed by said member in close proximity to said splicing surface (4) and a second position in which said second portion is remote from said splicing surface (4), a splicing arm (10) cooperative with said splicing surface (4) to apply splicing tape to essentially abutted leader (20) and use tape (26) ends retained at said splicing station (2) by said retaining means or by said lift arm (19); and means for supplying use tape (26) to said splicing station (2).

16. An apparatus as claimed in Claim 15 wherein the splicing block (3) is provided with a tape transport groove (4) and a blade groove intersecting the tape transport groove, a blade (8) mounted for driven displacement in said groove so as to traverse the tape transport groove, a cassette holder (11) for holding a cassette in juxtaposed relation to the splicing surface (4), power means for driving the hubs of the cassette in rotation and splicing means (1) including a splice head mounted for displacement between a withdrawn position and a position in which it acts upon the splicing surface (4).

## Patentansprüche

1. Verfahren zum Laden einer mit Vorspannband versehenden Kassette mit Nutzband (26), mit einer Bandlademaschine, wobei das Verfahren umfaßt: Einführen des führenden Endes (27) eines Endteils (26) eines Nutzbandes auf eine Spleißfläche (4), die durch eine Spleißglied (3) der Bandlademaschine bestimmt ist; lösbares Halten des Endes (27) in dieser Anordnung; Herausziehen einer Schlaufe von Vorspannband (20) aus einer mit Vorspannband versehenen Kassette, wobei die Kasasette derart gehalten wird, das ihre Naben durch die Antriebsmittel (15, 16) der Bandlademaschine rotiert werden können; Ablegen der herausgezogenen Vorspannband-Schleife (20), so daß das Vorspannband (20) mit dem Endteil (26) des Nutzbandes ausgerichtet und dem Nutzbandende (27) gegenüberliegt, wobei ein erstes integrales Teil der Länge des herausgezogenen Vorspannbandes (20) lösbar auf der Spleißfläche (4) gehalten ist und an seinem Ende mit der ersten Nabe an der Kassette verbunden ist und ein zweites integrales Teil der Länge des herausgezogenen Vorspannbandes (20) mit einer zweiten Nabe der Kassettennaben an seinem Ende gehalten ist; Trennen des Vorspannbandes (20) quer zur Längserstreckung, so daß die Vorspannbandschleife (20) am Ort des vorderen Endes des Nutzbandes (27) in erste und zweite Teile geteilt wird, wobei das resultierende hintere Ende des ersten Vorspannbandteils eine Stellung einnimmt, in der es im wesentlichen gegen das Nutzbandende (27) auf der Spleißfläche anstößt; Festhalten des zweiten Vorspannbandteils durch ein Bandhaltemittel (22) an einer Stelle, die von den im wesentlichen gegeneinanderstoßenden Enden des Nutzbandes (26) und des ersten Vorspannbandteils (20) entfernt ist; Bildung einer ersten Spleiße durch Aufbringen eines Spleißbandes auf die im wesentlichen gegeneinander stoßenden Enden des Nutzbandes (26) und des ersten Vorspannbandteils (20), wobei das Aufbringen des Spleißbandes der ersten Spleiße gegen die Spleißfläche (4) und mit den im wesentlichen gegeneinanderstoßenden Enden, die beide auf der Spleißoberfläche (4) getragen sind, stattfindet, um das erste Vorspannbandteil (20) an das Nutzband (26) zu spleißen; Drehen der ersten Nabe der Kassette, um das erste Vorspannbandteil (20) und das Nutzband (26) über die Spleißfläche (4) und in die Kassette einzudrehen; Beenden der Drehung der ersten Nabe, wenn eine bestimmte Länge des Nutzbandes (26) in die Kassette eingezogen ist; Trennen des Nutzbandes (26) quer zur Längserstreckung, wahrend das Nutzband (26) auf der Spleißfläche (4) lösbar gehalten wird; Bildung einer zweiten Spleiße durch Aufbringen eines Spleißbandes auf die im wesentlichen gegeneinander stoßenden Enden des Nutzbandes (26) und des zweiten Vorspannbandteils (20), um das zweite Vorspannbandteil (20) an das Nutzband (26) anzuspleißen, während das hintere Ende des Nutzbandes (26) auf der Spleißfläche (4) gehalten wird und wahrend das führende Ende des zweiten Vorspannbandteils (20) durch die Bandhaltemittel (22) im wesentlichen gegen das so gehaltene hintere Ende des Nutzbandes (26) anstoßend gehalten wird, wobei das Aufbringen des Spleißbandes der zweiten Spleiße gegen die Spleißfläche (4) stattfindet und wobei die im wesentlichen gegeneinander stoßenden Enden des Nutzbandes (26) und des zweiten Vorspannbandteils (20) beide von der Spleißfläche (4) getragen werden; Einführen des losen Bandes (26) in die Kassette; Entfernen der geladenen Kassette von ihrem Träger (11); wobei die ersten und zweiten Spleiße bei ihrer Bildung als Verbindung zwischen den Teilen des gespleißten Nutzbandes und des Vorspannbandes ausgebildet sind, wobei beide Teile auf der Spleißfläche (4) aufgenommen sind, so daß die Spleißläche (4) die Spleiße während ihrer Bildung unterstützt, dadurch gekennzeichnet, daß das Herausziehen der Vorspannbandschleife (20) und ihre Ablage in Ausrichtung mit dem Nutzband-Endteil (26) und die gegenüberliegende Anordnung in Bezug auf das Nutzbandende (27) erreicht wird durch
(i) ein Nutzbandherausziehteil (21), das auf das erste integrale Teil der Länge des Vorspannbandes (20) einwirkt und
(ii) durch Bandhaltemittel (22), die auf das zweite integrale Teil der Länge des herausgezogenen Bandes (20) wirken.

2. Verfahren nach Anspruch 1, bei dem das Ende des Endteils des Nutzbandes (26) auf der Spleißfläche (4) durch Aufbringen eines Vakuums durch Perforationen (6) in der Oberfläche lösbar gehalten ist.

3. Verfahren nach Anspruch 1 oder 2, bei dem das führende Ende (27) des Nutzbandendteils manuell auf der Spleißfläche (4) in einer ersten Phase eines kontinuierlichen Betriebsablaufs abgelegt wird, indem das Endteil auf der Spleißfläche (4) mit seinem Ende vor der Stelle der Spleißfläche (4) angeordnet wird, an der das Vorspannband im wesentlichen getrennt wird, und das Endteil des Nutzbandes dann an dieser Stelle abgetrennt und der vordere Bandrest entsorgt wird.

4. Verfahren nach einem oder mehreren der Ansprüche 1 bis 3, bei dem das vordere Ende (27) des Endteils auf der Spleißfläche (4) abgelegt wird, indem eine frühere vollständige Bandbetätigung gemäß Anspruch 1 in der Weise durchgeführt wird, daß das führende Ende des Nutzbandes (26), das durch seitliches Trennen des Nutzbandes (26) nach dem Aufwickeln der bestimmten Länge in die Kassette hergestellt wird, durch ein hinteres Teil der Spleißfläche (4) gehalten wird, deren vorderes Ende an der Linie der seitlichen Trennung liegt.

5. Verfahren nach einem oder mehreren der vorhergehenden Ansprüche, das die folgenden Schritte enthält: Ablegen eines führenden Endes (27) eines Endteils (26) eines Nutzbandes auf eine Spleißfläche (4), die durch ein Spleißteil (3) der Bandlademaschine definiert ist; lösbares Halten des Endes (27) in dieser Position; Herausziehen einer Schleife eines Vorspannbandes (2) aus einer mit Vorspannband versehenen Kassette durch eine Vorspannband-Auszieheinrichtung (19) der Maschine, wobei die Kassette mit ihrer Öffnung neben der Bandspleißfläche (4) angeordnet ist und dorthin gegenüberliegend geöffnet ist, um einen engen Raum zwischen der Kasettenöffnung und der Spleißfläche (4) zu bilden und so, daß ihre Naben durch Antriebsmittel (15, 16) der Bandlademaschine angetrieben werden können, wobei das Vorspannband-Ausziehmittel (19) durch Versetzen in den genannten Raum zwischen der Kassettenöffnung und der Spleißfläche (4) betätigbar ist; Anordnen der herausgezogenen Vorspannbandschleife (20) durch die Vorspannband-Herausziehmittel (19), so daß das Vorspannband (20) mit dem Nutzbandendteil (26) ausgerichtet und dem Nutzbandende (27) gegenüberliegt, wobei ein herausgezogenes erstes integrales Teil der Länge des Vorspannbandes (20) lösbar auf der Spleißfläche (4) gehalten ist und mit einer ersten Nabe der Kassettennaben an seinem Ende verbunden ist und ein zweites herausgezogenenes integrales Ende der Länge des herausgezogenen Vorspannbandes (20) lösbar durch Bandhaltemittel (22) des Führungsband-Herausziehmittels (19) gehalten wird und mit einer zweiten Nabe der Kassettennaben an ihrem Ende gehalten wird; Trennen des Vorspannbades (20) quer zur Längserstreckung, so daß die Vorspannbandschlaufe (20) in erste und zweite Teile am Ort des Nutzbandendes (27) geteilt ist wobei das resultierende hintere Ende des ersten Vorspannbandteils eine Stellung einnimmt, in der es im wesentlichen gegen das Nutzbandende (26) anstößt; wobei das zweite Vorspannbandteil durch die Bandhattemittel (22) der Bandauszieheinrichtung (19) an einem Ort gehalten wird, der von den im wesentlichen aneinanderstoßenden Enden des Nutzbandes (26) und des ersten Vorspannbandteils (20) beabstandet ist; Aufbringen von Spleißband auf die im wesentlichen gegeneinander stoßenden Enden des Nutzbandes (26) und des ersten Vorspannbandteils (20), wobei das Aufbringen des Spleißbandes gegen die Spleißfläche (4) stattfindet, und die im wesentlichen gegeneinander stoßenden Enden beide von der Spleißfläche (4) getragen werden, um das erste Vorspannbandteil (20) mit dem Nutzband (26) zu spleißen, das durch Spleißmittel (10) ausgeführt wird, die in dem Raum zwischen der Kassettenöffnung und der Spleißfläche wirken; Drehen der ersten Nabe (15) der Kassette, um das erste Vorspannbandteil (20) und das Nutzband (26) über die Spleißfläche (4) und in die Kassette zu ziehen, Beenden der Drehung der ersten Nabe; wenn eine bestimmte Lange des Nutzbandes (26) in die Kassette eingezogen ist, Trennen des Nutzbandes (26) quer zu seiner Längsausdehnung, während das Nutzband (26) lösbar auf der Spleißfläche (4) gehalten ist; Aufbringen eines Spleißbandes auf die wesentlichen gegeneinander stoßenden Enden des Nutzbandes (26) und des zweiten Vorspannbandteils (20), um das zweite Vorspannbandteil (20) mit dem Nutzband (26) zu spleißen, während das hintere Ende des Nutzbandes (26) lösbar auf der Spleißfläche (4) gehalten ist und während das führende Ende des zweiten Vorspannbandteils (20) im wesentlichen anstoßend an das so gehaltene Ende des Nutzbandes (26) durch das Bandhaltemittel (22) des Vorspannband-Ausziehmittels (19) gehalten wird wobei das Aufbringen des Spleißbandes gegen die feste Spleißoberfläche (4) stattfindet, und die im wesentlichen gegeneinanderstoßenden Enden des Nutzbandes (26) und des zweiten Vorspannbandteils (20) auf der festen Spleißfläche (4) getragen werden; Aufnehmen des losen Bandes (26) in die Kassette; und Entfernen der geladenen Kassette aus ihrem Träger (11).

6. Verfahren nach einem oder mehreren der vorgehenden Ansprüche, wobei das Herausziehen des Vorspannbandes durch Betätigung eines Vorspannband-Herausziehmittels (19) bewirkt wird, das ein erstes Teil (18) zur Einwirkung auf das erste Vorspannbandteil (20) enthält; wobei das erste Teil mit der Spleißfläche (4) in Kontakt gebracht wird und ein zweites Teil (19) zur Einwirkung auf das zweite Vorspannbandteil (20) enthält, das ein Haltemittel (22) bildet, durch das das zweite Vorspannbandteil (20) lösbar gehalten ist.

7. Verfahren nach Anspruch 6, bei dem das zweite Vorspannbandteil (20) durch Aufbringen eines Vakuums durch Öffnungen in einer Oberfläche des Haltemittels (22) lösbar gehalten ist.

8. Verfahren nach einem oder mehreren der vorhergehenden Ansprüche, bei dein das führende Ende des Nutzbandes (26) nach seiner Trennung lösbar auf der Spleißfläche derart gehalten ist, daß ein weiterer Betriebszyklus nach Entfernung der geladenen Kassette aus ihrem Träger (11) begonnen werden kann.

9. Verfahren nach einem oder mehreren der vorhergehenden Ansprüche, bei dem das Endteil (26) des Nutzbandes auf einem ersten Teil der Spießfläche (4) gehalten ist und dessen zweites Ende (27) sich neben der Verbindung des ersten Spleißflächenteils (4) mit einem zweiten Teil der Spleißfläche (4) befindet, und wobei das erste Teil des herausgezogenen Vorspannbandes (20) auf dem zweiten Teil der Spleißfläche (4) gehalten ist und das Vorspannband (20) an der Verbindung der beiden Flächen getrennt wird.

10. Verfahren nach einem oder mehreren der vorhergehenden Ansprüche, bei dem die Spleißfläche der Bandlademaschine derart fixiert ist, daß sie unter den Spleißflächen unbewegbar ist, ohne geringste Setzungen.

11. Einrichtung zum Beladen einer Kassette mit einem Nutzband (26) mit einer Spleißstation (2), die eine Spleißfläche (4) aufweist, die durch ein Spleißteil (3) bestimmt ist, wobei während des Betriebs der Einrichtung Band über die Speißfläche (4) geführt wird, mit Bandtrennmitteln (7) zum Überfahren der Fläche zwischen ihrem hinteren und vorderen Ende, um Band quer zur Längserstreckung zu trennen, mit Vakuummitteln (5, 6) der Spleißfläche (4), um so geschnittene Bandlängen lösbar auf der Spleißfläche (4) zu halten, mit Kassettenhaltemitteln (11) zum Halten einer mit Vorspannband versehenen Kassette, mit Mitteln zum Drehen eines von ersten und zweiten Naben der Kassette, um Band auf die Nabe aufzuziehen, Vorspannband-Auszugsmitteln (19) zum Herausziehen einer Schlaufe eines Vorspannbandes (20) aus der Kassette, wobei ein herausgezogenes erstes integrales Teil der Länge des Vorspannbandes (20) lösbar auf der Spleißfläche (4) gehalten wird und mit der ersten Nabe der Kassettennaben am Ende und an einem zweiten herausgezogenen integralen Teil der Länge des Vorspannbandes (20) mit einer zweiten Nabe der Kasssettennaben an ihrem Ende verbunden ist, wobei das Vorspannband-Auszugsmittel so betätigbar ist, daß es das erste integrale Teil der Länge des Vorspannbandes, das an der Nabe (15) befestigt ist, in Kontakt mit der Spleißfläche (4) bringt wobei Bandhaltemittel (22) eine erste Stellung aufweisen, in der ein zweiter Teil der Länge des Vorspannbandes (20) von dem Haltemittel in enger Nachbarschaft zur Spleißfläche (4) gehalten wird und eine zweite Stellung, in der ein zweiter Teil von der Spleißfläche (4) entfernt ist, mit Mitteln (10), die gegen die Spleißfläche (4) betätigbar sind, um Spleißband auf die im wesentlichen gegeneinander stoßenden Bandenden, die auf der Spleißstation (2) gehalten sind, aufzubringen, wobei die Spleiße wahrend ihrer Bildung als Verbindung zwischen den Teilen des gespleißten Nutzbandes und des Vorspannbandes angeordnet sind, wobei beide Teile auf der Spleißfläche gehalten werden, so daß die Spleißfläche während ihrer Bildung den Spleißen unterliegt, und Steuermitteln, um die Betätigung der Einrichtung gemäß dem Verfahren nach Anspruch 1 auszuführen; Mitteln zur Zuführung vom Band zur Spleißstation, dadurch gekennzeichnet, daß das Vorspannband-Auszugsmittel enthält:
(i) ein Vorspannband-Aszugsmittel (21), das auf das erste integrale Teil der Länge des Vorspannbandes (20) einwirkt und
(ii) Bandhaltemittel (22), die auf das zweite integrale Teil der Länge des Vorspannbandes (20) einwirken.

12. Einrichtung nach Anspruch 11 mit einem Kassettenträger (11) zur Aufnahme einer mit Vorspannband versehenen Kassette und zum Ausrichten der Kassette mit dessen Öffnung gegenüber der Spleißfläche (4) und Öffnung gegenüberliegend damit, um einen schmalen Raum zwischen der Kassettenöffnung und der Spleißfläche (4) zu bilden, wobei die Vorspannband-Auszugsmittel in dem genannten Raum zwischen der Kassettenöffnung und der Spleißfläche betätigbar sind, um ein erstes integrales Teil der Länge des Vorspannbandes, das an der Nabe befestigt ist, in Kontakt mit der Spleißfläche (4) zu bringen und daß das Bandspleißmittel (10) in dem Raum zwischen der Kassettenöffnung und der Spleißfläche (4) wirkt, um Spleißband auf die im wesentlichen gegeneinander stoßenden Bandenden, die an der Spleißfläche (4) gehalten werden, aufzubringen.

13. Einrichtung nach Anspruch 11 oder 12, bei der die Einrichtung zum lösbaren Halten des Bandes auf der Spleißfläche (4) eine Vakuumquelle enthält, die sich durch Öffnungen (6) der Spleißfläche (4) öffnen.

14. Einrichtung nach Anspruch 11 oder 12, bei dem ein hin- und hergehendes Mittel (23) vorgesehen ist, um die mit Vorspannband versehene Kassette vorzubereiten, wobei das Mittel ein Teil (23) enthält, das eine zurückgezogene Position einnimmt, in der es keinen Einfluß auf das Band hat, das an den Naben der Kassette befestigt ist, und eine vorgerückte Position, in der es in Kontakt mit einer Vorspannbandschlaufe (20) gebracht ist, die aus der Kassette herausgezogen und auf der Spleißfläche (4) gehalten ist, um einen längeren Laufweg des Vorspannbandes zu bilden.

15. Einrichtung nach einem oder mehreren der Ansprüche 11 - 14 mit einer Spleißstation (2), die einen stationären Spleißblock (3) mit einer Spleißfläche (4) aufweist, mit einem Messer (7) zur Überquerung der Oberfläche, um Band quer zu seiner Langserstreckung zu teilen, mit Vakuumöffnungen (5, 6), um Band lösbar auf der Spleißfläche (4) zu halten, mit Mitteln zur Aufnahme einer mit Vorspannband versehenen Kassette und zur Ausrichtung der Kassette mit der Öffnung gegenüber der Spleißfläche (4), die sich Seite an Seite gegenüberliegend der Spleißfläche (4) öffnet, mit Mitteln zur Drehung einer Nabe der Kassette, um Band auf die Nabe zu ziehen, mit einem Auszugsarm (19) zum Ausziehen eines Vorspannbandes (20) aus der Kassette, wobei der Arm so betätigbar ist, daß er ein erstes integrales Teil der Länge des Vorspannbandes (20), das an der Nabe befestigt ist, in Kontakt mit der Spleißfläche (4) bringt, mit einem Hubarm (22), der eine erste Stellung einnimmt, in der ein, zweites integrales Teil der Länge des Vorspannbandes (20) in enge Nachbarschaft zur Spleißfläche (4) gebracht ist und einer zweiten Position, in der der zweite Teil von der Spleißfläche (4) entfernt ist, mit einem Spleißarm (10), der mit der Spleißfläche (4) zusammenwirkt, um Spleißband auf die im wesentlichen gegeneinander stoßende Vorspannband- (20) und Nutzband- (26) Enden aufzubringen, die auf der Spleißstation (2) durch das Haltemittel oder den Hubarm (19) gehalten werden; und mit Mitteln zur Zuführung von Nutzband (26) zur Spleißstation (2).

16. Einrichtung nach Anspruch 15, bei der Spleißblock (3) mit einer Bandtransportvertiefung (4) und einer Messervertiefung versehen ist, die die Bandtransportführung unterteilt, mit einem Messer (8), das so befestigt ist, daß es in der Vertiefung die Bandtransportvertiefung durch Antrieb überqueren kann, mit einem Kassettenhalter (11) zum Halten einer Kassette gegenüberliegend der Spleißfläche (4), mit Antriebsmitteln zum Drehantrieb der Naben der Kassette und Spleißmitteln (1) einschließlich eines Spleißkopfes, der so angeordnet ist, daß er zwischen einer zurückgezogenen Position und einer Postion, in der er auf die Spleißfläche (4) einwirkt, verschoben werden kann.

## Revendications

1. Procédé de chargement d'une cassette à amorce à l'aide d'un ruban utile (26) utilisant une machine de chargement de ruban, lequel procédé consiste à disposer une extrémité avant (27) d'une partie terminale (26) d'un ruban utile sur une surface de raccordement (4) définie par un élément de raccordement (3) de ladite machine de chargement de ruban, retenir de manière libérable ladite extrémité (27) dans une telle disposition, extraire une boucle de ruban (20) formant amorce d'une cassette d'amorce, la cassette étant supportée de telle sorte que ses moyeux puissent être mil en rotation par des moyens d'entraînement (15, 16) de ladite machine de chargement de ruban, disposer la boucle extraite (20) de ruban formant amorce de telle sorte que ledit ruban formant amorce (20) soit aligné avec la dite partie terminale (26) de ruban d'utilisation et soit juxtaposé par rapport à l'extrémité (27) du ruban utile, une première partie en une seule pièce de la longueur dudit ruban extrait formant amorce (20) étant retenue de manière libérable sur ladite surface de raccordement (4) et fixée à un premier moyeu desdits moyeux de la cassette par son extrémité et une seconde partie en une seule pièce de la longueur dudit ruban extrait (20) formant amorce étant fixée par son extrémité au second moyeu desdits moyeux de la cassette, fendre le ruban formant amorce (20) à travers sa dimension latérale de sorte que ladite boucle (20) de ruban formant amorce est divisée en une dite première et une dite seconde parties au niveau de l'emplacement de ladite extrémité de tête (27) du ruban, l'extrémité de queue résultante de ladite première partie de ruban formant amorce occupant une position dans laquelle elle est pratiquement en butée avec l'extrémité (27) du ruban utile située sur ladite surface de raccordement, maintenir ladite seconde partie de ruban formant force par l'intermédiaire de moyens (22) de retenue de ruban au niveau d'un emplacement écarté des extrémités pratiquement en butée dudit ruban utile (26) et de ladite première partie (20) de ruban formant amorce, former un premier raccord par application d'un ruban de raccordement sur les extrémités pratiquement en butée dudit ruban utile (26) et de ladite première partie (20) de ruban formant amorce, l'application du ruban de raccordement dudit premier raccord étant effectuée contre la surface de raccordement (4) et lesdites deux extrémités pratiquement en butée étant supportées sur ladite surface de raccordement (4) pour raccorder la première partie (20) de ruban formant amorce au ruban utile (26), faire tourner le premier moyeu de la cassette pour effectuer un enroulement pour tirer ladite première partie (20) de ruban formant amorce et ledit ruban utile (26) à travers la surface de raccordment (4) et dans la cassette, arrêter la mise en rotation dudit premier moyeu lorsqu'une longueur prédéterminée dudit ruban utile (26) a été tirée jusque dans la cassette, fendre la ruban utile (26) à travers sa dimension latérale tout en retenant de manière libérable le ruban utile (26) sur ladite surface de raccordement (4),tout en retenant de manière libérable l'extrémité de queue dudit ruban utile (26) sur la dite surface de raccordement (4) alors que l'extrémité de tête de ladite seconde partie (20) de ruban formant amorce est maintenue par lesdits moyens (22) de retenue de ruban pratiquement en butée par rapport à l'extrémité de queue ainsi retenue dudit ruban utile (26), former un second raccord par application d'un ruban de raccordement sur les extrémités pratiquement en butée dudit ruban utile (26) et de ladite seconde partie (20) de ruban formant amorce pour raccorder la seconde partie (20) de ruban formant amorce au ruban utile (26), l'application du ruban de raccordement dudit second raccord étant réalisée contre la surface de raccordement (4) et lesdites extrémités pratiquement en butée dudit ruban utile (26) et de la dite seconde partie (20) de ruban formant amorce étant toutes deux supportées sur ladite surface de raccordement (4), prendre le ruban détendu (26) dans la cassette, et supprimer la cassette chargée de son support (11), le premier et le second raccords formés étant disposés en tant que liaison entre les parties raccordées du ruban utile et du ruban formant amorce dont les deux parties sont reçues sur la surface de raccordement (4) de telle sorte que la surface de raccordement (4) soit sous-jacente auxdits raccords pendant leur formation, caractérisé en ce que l'extraction de ladite boucle (20) de ruban d'amorce et sa disposition en alignement avec ladite partie terminale (26) de ruban utile et sa juxtaposition par rapport à l'extrémité (27) du ruban utile sont accomplies (i) par un élément (21) d'extraction d'amorce agissant sur ladite première partie en une seule pièce de la longueur dudit ruban (20) formant amorce et (ii) par lesdits moyens (22) de retenue de ruban agissant sur ladite seconde partie en une seule pièce de la longueur dudit ruban (20) extraite.

2. Procédé selon la revendication 1, dans lequel l'extrémité de la partie terminale du ruban utile (26) est retenue de manière libérable sur la surface de raccordement (4) par application de vide à travers des perforations (6) situées dans ladite surface.

3. Procédé selon la revendication 1 ou 2, dans lequel l'extrémité de tête (27) de la partie terminale du ruban utile est disposée manuellement sur la surface de raccordement (4) dans une première phase de fonctionnement continu en disposant la partie terminale sur la surface de raccordement (4), son extrémité étant en aval de la position sur la surface de raccordement (4) au niveau de laquelle le ruban formant force est ensuite fondu et fendre ensuite la partie terminale de ruban utile au niveau d'une telle position et écarter le ruban aval restant.

4. Procédé salon l'une quelconque des revendications 1 à 3, dans lequel l'extrémité de tête (27) de la partie terminale est disposée sur la surface de raccordement (4) en exécutant l'opération antérieure relative à un ruban complet telle que définie dans la revendication 1 de telle manière que l'extrémité de tête dudit ruban utile (26) produite par la découpe latéralement dudit ruban utile (26) suivant l'enroulement de la longueur prédéterminée de celui-ai dans ladite cassette est retenue par une partie mont de le surface de raccordement (4) ayant son extrémité aval située au niveau de la ligne de la fente latérale.

5. Procédé selon l'une quelconque des revendications précédentes, lequel procédé consiste à disposer une extrémité de tête (27) d'une partie terminale (26) d'un ruban utile sur une surface de raccordement (4) définie par un élément de raccordement (3) de ladite machine de chargement de ruban, retenir de manière libérable ladite extrémité (27) dans une telle disposition, extraire une boucle de ruban formant amorce (2) à partir d'une cassette d'amorce par l'intermédiaire de moyens (19) d'extraction d'amorce de la machine, la cassette étant supportée en ayant son ouverture adjacente à ladite surface de raccordement (4) et ouvrant en vis à vis de celle-ci pour définir un espace étroit entre l'ouverture de la cassette et la surface de raccordement (4) et de telle sorte que ses moyeux puissent être mis en rotation par des moyens d'entraînement (15, 16) de ladite machine de chargement de ruban, lesdits moyens (19) d'extraction d'amorce pouvant être actionnés par déplacement dans l'espace cité ci-dessus existant entre l'ouverture de la cassette et la surface de raccordement (4), disposer la boucle extraite (20) de ruban formant amorce par l'intermédiaire desdits moyens (19) d'extraction d'amorce de telle sorte que ledit ruban (20) formant amorce soit en alignement avec ladite partie (26) terminale de ruban utile et soit superposé par rapport à l'extrémité (27) du ruban utile, une première partie extraite en une seule pièce de la longueur dudit ruban (20) formant amorce étant retenue de manière libérable sur ladite surface de raccordement (4) et fixée par son extrémité a un premier moyeu des moyeux de la cassette et une seconde partie extraite en une seule pièce de la longueur dudit ruban (20) formant amorce extraite étant retenue de manière libérable par les moyens (22) de retenue de ruban desdits moyens (19) d'extraction d'amorce et fixée par son extrémité sur un second moyeu des moyeux de la cassette, fendre le ruban (20) formant amorce à travers sa dimension latérale de telle sorte que ladite boucle (20) de ruban formant amorce soit séparée en une cite première et une dite seconde partie au niveau de l'emplacement de ladite extrémité (27) de ruban utile, l'extrémité de queue résultante de la dite première partie de ruban formant amorce occupant une position dans laquelle elle est pratiquement an butée avec l'extrémité (26) du ruban utile, et ladite seconde partie de ruban formant amorce étant retenue par lesdits moyens (22) de retenue de ruban desdits moyens (19) d'extraction d'amorce au niveau d'un emplacement écarté de l'extrémité pratiquement en butée dudit ruban utile (26) et de ladite première partie (20) de ruban formant amorce, appliquer un ruban de raccordement sur les extrémités pratiquement en butée du ruban utile (26) et de ladite première partie (20) de ruban formant amorce, l'application du ruban de raccordement étant réalisée contre la surface de raccordement (4) et lesdites extrémités pratiquement en butée étant toutes deux supportées sur ladite surface de raccordement (4) pour raccorder la première partie (20) de ruban formant amorce au ruban utile (26) et étant effectuée par des moyens de raccordement (10) agissant dans l'espace existant entre l'ouverture de la cassette et la surface de raccordement, mettre en rotation le premier moyeu (15) de la cassette pour tirer ladite première partie (20) de ruban formant amorce et ledit ruban utile (26) à travers la surface de raccordement (4) et jusque dans la cassette, arrêter la rotation du dit premier moyeu lorsqu'une longueur prédéterminée dudit ruban utile (26) a été tirée jusque dans la cassette, fendre le ruban utile (26) à travers sa dimension latérale tout en retenant de manière libérable ledit ruban utile (26) sur ladite surface de raccordement (4), tout en retenant de manière libérable l'extrémité de queue dudit ruban utile (26) sur ladite surface de raccordement (4) et tout en maintenant l'extrémité de tête de ladite seconde partie (20) de ruban formant amorce pratiquement en butée par rapport à l'extrémité de queue ainsi retenue dudit ruban utile (26) par lesdits moyens (22) de retenue de ruban desdits moyens (19) d'extraction d'amorce, appliquer un ruban de raccordement sur les extrémités pratiquement en butée dudit ruban utile (26) et de ladite seconde partie (20) de ruban fermant amorce pour raccorder la seconde partie (20) de ruban formant amorce au ruban utile (26), l'application du ruban de raccordement étant réalisée contre la surface de raccordement fixe (4) et lesdites extrémités pratiquement en butée dudit ruban utile (26) et de ladite seconde partie (20) de ruban formant amorce étant toutes deux supportées sur ladite surface de raccordement fixe (4), prendre le ruban détendu (26) dans la cassette, et enlever la cassette chargée de son support (11).

6. Procédé selon l'une quelconque des revendications précédentes, dans lequel l'extraction d'amorce est effectuée par actionnement de moyens (19) d'extraction d'amorce comportant un premier élément (18) destiné à venir en prise avec la première partie (20) de ruban d'amorce et amener ladite première partie en contact avec ladite surface de raccordment (4) et un second élément (19) destiné à venir en prise avec la seconde partie (20) de ruban d'amorce et définissant des moyens de retenue (22) par lesquels ladite seconde partie (20) de ruban formant force est retenue de manière libérable.

7. Procédé selon la revendication 6, dans lequel la seconde partie (20) de ruban formant amorce est retenue de manière libérable par application de vide à travers des perforations situées dans une surface desdits moyens (22) de retenue.

8. Procédé selon l'une quelconque des revendications précédentes, dans lequel l'extrémité de tête dudit ruban utile (26), après avoir fendu celui-ci, est retenue de manière libérable sur ladite surface de raccordement (4) de telle sorte qu'un autre cycle d'actionnement peut être démarré après enlèvement de la cassette chargée de son support (11).

9. Procédé selon l'une quelconque des revendications précédentes, dans lequel ladite partie terminale (26) de ruban utile est retenue sur une première partie de ladite surface de raccordement (4) et son extrémité (27) est adjacente à la jonction de ladite première partie de surface de raccordement (4) avec une seconde partie de surface de raccordement (4) et dans lequel ladite première partie dudit ruban (20) formant amorce extraite est retenue sur ladite seconde partie de surface de raccordement (4) et ledit ruban (20) formant amorce est fendu au niveau de ladite jonction des deux surfaces.

10. Procédé selon l'une quelconque des revendications précédentes, dans lequel la surface de raccordement de ladite machine de chargement de ruban est flxée de manière à être immobile soins l'action des forces de raccordement sans subir de petits déplacements.

11. Dispositif pour charger une cassette à l'aide de ruban utile (26), lequel dispositif comporte un poste de raccordement (2) comportant une surface de raccordement (4) définie par un élément de raccordement (3), le ruban passant à travers ladite surface de raccordement (4) lors du fonctionnement du dispositif, des moyens (7) de découpe de ruban destinés à traverser ladite surface entre ses extrémités amont et aval pour découper le ruban à travers sa dimension latérale, des moyens de mise sous vide (5, 6) de la surface de raccordement (4) pour retenir chacune des longueurs de ruban ainsi fendu de manière libérable sur ladite surface de raccordement (4), des moyens (11) formant support de cassette destinés à supporter une cassette d'amorce, des moyens pour mettre en rotation un parmi le premier et le second moyeux de la cassette pour tirer le ruban sur ledit moyeu, des moyens (19) d'extraction d'amorce destinés à extraire une boucle de ruban (20) formant amorce à partir de ladite cassette, et une première partie extraite en une seule pièce de la longueur du dit ruban (20) formant amorce étant retenue de manière libérable sur ladite surface de raccordement (4) et fixée par son extrémité à un premier moyeu parmi lesdits moyeux de la cassette et une seconde partie extraite en une seule pièce de la longueur dudit ruban (20) formant amorce étant fixée par son extrémité sur un second moyeu parmi lesdits moyeux de la cassette, lesdits moyens d'extraction d'amorce pouvant être actionnés pour amener la première partie en une seule pièce de la longueur dudit ruban formant amorce fixée sur ledit moyeu (4) en contact avec ladite surface de raccordement (4), des moyens (22) de retenue de ruban ayant une première position dans laquelle une seconde partie de la longueur dudit ruban (20) formant amorce est retenue par ledit élément de retenue à proximité étroite de la dite surface de raccordement (4) et une seconde position dans laquelle ladite seconde partie est éloignée de laite surface de raccordement (4), des moyens (10) pouvant être actionnés contre la surface de raccordement (4) pour appliquer du ruban de raccordement sur les extrémités de ruban pratiquement en butée retenues au niveau du poste de raccordement (2), les raccords en formation étant agencés en tant que liaison entre des parties raccordées de ruban utile et de ruban formant amorce dont les deux parties sont reçues sur la surface de raccordement (4) de telle sorte que la surface de raccordement (4) soit située endessous desdits raccords pendant leur formation, et des moyens de commande agissant pour conformer l'actionnement du dispositif au régime du procédé défini dans la revendication 1, des moyens pour alimenter du ruban vers ledit poste de raccordement, caractérisé en ce que les moyens d'extraction d'amorce comportent (i) un élément (21) d'extraction d'amorce destiné à agir sur ladite première partie en une seule pièce de la longueur dudit ruban (20) formant amorce et (ii) lesdits moyens (22) de retenue de ruban destinés à agir sur ladite seconde partie en une seule pièce de longueur dudit ruban (20) formant amorce.

12. Dispositif selon la revendication 11, et comportant des moyens (11) formant support de cassette destinés à supporter une cassette d'amorce et orienter ladite cassette de manière à avoir son ouverture adjacente à ladite surface de raccordement (4) et ouvrant en vis à vis de celle-ci pour définir un espace étroit entre l'ouverture de la cassette et la surface de raccordement (4), les moyens d'extraction d'amorce pouvant être actionnés dans l'espace cité ci-dessus existant entre l'ouverture de la cassette et la surface de raccordement pour amener une première partie en une seule pièce de la longueur dudit ruban formant amorce fixée sur ledit moyeu en contact avec ladite surface de raccordement (4) et les moyens (10) de raccordement de ruban agissant dons l'espace existant entre l'ouverture de la cassette et la surface de raccordement (4) pour appliquer une ruban de raccordement sur les extrémités de ruban pratiquement en butée retenues adjacentes à ladite surface de raccordement (4).

13. Dispositif selon la revendication 11 ou 12, dans lequel lesdits moyens pour retenir ledit ruban de manière libérable sur ladite surface de raccordement (4) comportent une source de vide débouchant à travers des perforations (6) situées dans la surface de raccordement (4).

14. Dispositif selon la revendication 11 ou 12, dans lequel des moyens (23) à déplacement en va et vient sont agencés pour conditionner ladite cassette d'amorce, lesdits moyens comportant un élément (23) ayant une position rétractée dans laquelle il n'a aucune influence sur le ruban fixé sur les moyeux de la cassette et une position avancée dans laquelle il a été amené en contact avec une boucle (20) de ruban formant amorce extraite à partir de ladite cassette et retenue sur ladite surface de raccordement (4) de manière à définir un trajet de circuit plus long pour ledit ruban formant amorce.

15. Dispositif salon l'une quelconque des revendications 11 à 14 et comportant un poste de raccordement (2) comportant un bloc (3) de raccordement fixe ayant une surface de raccordement (4), une 1ame (7) destinée à traverser ladite surface pour découper le ruban à travers sa dimension latérale, des ouvertures pour vide (5, 6) destinées à retenir le ruban de manière libérable sur ladite surface de raccordement (4), des moyens pour supporter une cassette d'amorce et orienter ladite cassette, son ouverture étant adjacente à ladite surface de raccordement (4) et ouvrant en vis à vis de la surface de raccordement (4), des moyens pour mettre en rotation un moyeu de la cassette pour tirer du ruban jusque sur ledit moyeu, un bras d'extraction (19) pour extraire du ruban formant amorce (20) à partir de ladite cassette, ledit bras pouvant être actionné pour amener une première partie en une seule pièce de la longueur dudit ruban (20) formant amorce fixée sur ledit moyeu en contact avec ladite surface de raccordement (4), un bras de levage (22) ayant une première position dans laquelle une seconde partie en une seule pièce de la longueur dudit ruban (20) formant amorce est agencée par ledit élément à proximité étroite de ladite surface de raccordement (4) et une seconde position dans laquelle ladite seconde partie est éloignée de ladite surface de raccordement (4), un bras de raccordement (10) coopérant avec ladite surface de raccordement (4) pour appliquer du ruban de raccordement sur les extrémités d'amorce (20) et de ruban utile (26) pratiquement en butée retenues au niveau dudit poste de raccordement (2) par l'intermédiaire desdits moyens de retenue ou par ledit bras de levage (19), et des moyens pour alimenter du ruban utile (26) vers ledit poste de raccordement (2).

16. Dispositif selon la revendication 15, dans lequel le bloc de raccordement (3) est muni d'une gorge (4) de transport de ruban et d'une gorge pour lame recoupant la gorge de transport de ruban, d'une lame (8) montée pour avoir un déplacement entraîné dans ladite gorge de manière à traverser la gorge de transport de ruban, d'un support (11) de cassette destiné à supporter une cassette de manière juxtaposée à la surface de raccordement (4), des moyens de puissance destinés à entraîner en rotation les moyeux de la cassette et les moyens de raccordements (1) comportent une tête de raccordement montée pour se déplacer entre une position retirée et une position dans laquelle elle agit sur la surface de raccordement (4).
